# EUROPÄISCHE PATENTSCHRIFT

(11) **EP 2 117 899 B1**
(45) Veröffentlichungstag und Bekanntmachung des Hinweises auf die Patenterteilung: **08.02.2017**
(21) Anmeldenummer: 07847931.8
(22) Anmeldetag: 06.12.2007
(51) Int. Cl.: B60T 5/00

(54) **BREMSSTAUBAUFNAHMEVORRICHTUNG FÜR KRAFTFAHRZEUGE**
BRAKE DUST COLLECTING DEVICE FOR MOTOR VEHICLES
DISPOSITIF POUR RECUEILLIR LA POUSSIÈRE DE FREIN POUR VÉHICULES AUTOMOBILES

(30) Priorität: 08.01.2007 DE 202007000246 U
(43) Veröffentlichungstag der Anmeldung: 18.11.2009
(73) Patentinhaber: MANN+HUMMEL GmbH, 71638 Ludwigsburg (DE)
(72) Erfinder: JESSBERGER, Thomas, 71679 Asperg (DE)
(86) Internationale Anmeldenummer: PCT/EP2007/063460
(87) Internationale Veröffentlichungsnummer: WO 2008/083884

(56) Entgegenhaltungen:
- EP-A- 0 204 433
- CH-A5- 687 013
- DE-A1- 4 008 333
- DE-A1- 4 240 873
- DE-C2- 19 643 869
- FR-A- 2 751 390
- FR-A- 2 815 099
- GB-A- 2 031 538
- JP-A- 4 054 330
- JP-A- 9 156 480
- US-A- 5 772 286

## Beschreibung

### Technisches Gebiet

Die Erfindung bezieht sich auf eine Bremsstaubaufnahmevorrichtung für Kraftfahrzeuge nach dem Oberbegriff des Anspruches 1.

### Stand der Technik

Die Schrift DE 42 40 873 A1 offenbart eine Bremsstaubrückhaltevorrichtung zum Sammeln und Aufbewahren des Bremsstaubes mit einer Absaugdüse, die über eine Saugleitung mit einem zentralen Sauggebläse verbunden ist.

In der JP 09 156480 A wird eine Vorrichtung zur Kühlung eines Bremssystems eins Fahrzeuges beschrieben, die aus einer Kupplung und einem Lüfterrad besteht, wobei das Lüfterrad über die Kupplung beweglich an der Felge befestigt ist, so dass es beim Bremsen und noch im Stillstand des Fahrzeuges rotiert und eine Kühlwirkung eintritt.

Aus der US A 5 772 286 ist eine Reifenstaub-Filtereinrichtung ("wheel dust filter") bekannt, die als eine zentrale Aufnahmeplatte mit plattenförmigen Filterelementen mit der Reifenfelge auf der Radnabe montiert ist und den Staub zwischen Bremse und Rad aufnimmt.

Eine Aufnahmevorrichtung für den Bremsstaub, welcher beim Abbremsen eines Kraftfahrzeugs in der Fahrzeug-Radbremse durch Abrieb der Bremsbeläge entsteht, wird in der DE 196 43 869 C2 beschrieben. Die Bremsstaubaufnahmevorrichtung ist als Saugvorrichtung ausgeführt, die einen Staubaufnehmer umfasst, dessen der Bremsscheibe zugewandtes Ende eine Saugöffnung aufweist und dessen anderes Ende über eine Saugleitung mit einem Sammelbehälter zur Aufnahme des Bremsstaubes verbunden ist. Der Sammelbehälter ist über eine Saugleitung mit dem Ansaugkrümmer der Brennkraftmaschine verbunden, so dass der im Ansaugkrümmer herrschende Unterdruck auch in dem Sammelbehälter wirksam wird und auf diese Weise ein Absaugen des Bremsstaubes in den Sammelbehälter hinein realisiert werden kann.

Diese Ausführung setzt eine Strömungsverbindung zwischen dem Ansaugkrümmer im Ansaugtrakt der Brennkraftmaschine und dem Sammelbehälter für den Bremsstaub voraus, was einen erheblichen konstruktiven Aufwand mit sich zieht. Ein Nachteil ist auch darin zu sehen, dass durch die Abzweigung der Saugleitung in den Sammelbehälter der Druck im Ansaugtrakt beeinflusst wird, wodurch sich auch die Luftzufuhr in die Zylinder der Brennkraftmaschine ändert; dies muss bei der Motorsteuerung berücksichtigt werden. Außerdem ist ein Einsatz in aufgeladenen Brennkraftmaschinen aufgrund des von dem Verdichter erzeugten Überdrucks nicht möglich.

### Offenbarung der Erfindung

Der Erfindung liegt die Aufgabe zugrunde, mit einfachen konstruktiven Maßnahmen eine wirksame Bremsstaubaufnahmevorrichtung für Kraftfahrzeuge zu schaffen. Vorteilhafterweise soll die Bremsstaubaufnahmevorrichtung auch einen hohen Wirkungsgrad aufweisen.

Diese Aufgabe wird erfindungsgemäß mit den Merkmalen des Anspruches 1 gelöst. Die Unteransprüche geben zweckmäßige Weiterbildungen an.

Bei der erfindungsgemäßen Bremsstaubaufnahmevorrichtung für Kraftfahrzeuge ist die Luftstromerzeugungseinrichtung, über die der Luftstrom erzeugt wird, welcher den Bremsstaub von den Bremseinrichtungen abtransportiert, als mindestens eine Lüfterschaufel ausgebildet. Diese Lüfterschaufel generiert einen Luftstrom, der in Richtung auf die Staubsammeleinrichtung geleitet wird, welche als Filterelement ausgeführt ist. Der vom Luftstrom erfasste Bremsstaub wird von dem Filterelement ausgefiltert, anschließend kann der gereinigte Luftstrom in die Atmosphäre abgeleitet werden. Die Filtration im Filterelement erlaubt eine bestmögliche Reinigung des Luftstromes. Dies hat zum einen den Vorteil, dass die Umweltbelastung mit Feinstaub erheblich reduziert ist, zum andern wird vermieden, dass sich der Bremsstaub im sichtbaren Bereich der Felge oder an Karosserieteilen des Fahrzeuges ablagert und zu einer das ästhetische Erscheinungsbild beeinträchtigenden Verschmutzung führt, die gegebenenfalls sogar Funktionsbeeinträchtigungen nach sich ziehen kann. Der Luftstrom wird insbesondere von der Außenseite des Fahrzeuges nach innen geführt und im Filterelement der Reinigung unterzogen.

Die mindestens eine Lüfterschaufel sitzt erfindungsgemäß an der Innenseite der Radfelge bzw. an einem mit der Radfelge drehfest gekoppelten Bauteil. Die Drehbewegung der Radfelge ist auch auf das Lüfterrad übertragbar, wobei über die strömungsgünstige Gestaltung der Lüfterschaufel Frischluft angesaugt wird, insbesondere durch Strömungsöffnungen in der Radfelge hindurch, die über die Bremsenteile gelenkt wird, an denen der Bremsabrieb entsteht, also über die Bremsscheiben bzw. gegebenenfalls auch über die Bremstrommeln. Der Druck im Luftstrom, der von der mindestens einen Lüfterschaufel erzeugt wird, ist hierbei groß genug, um den Strömungswiderstand des Filterelements zu überwinden. Verschmutzt das Filterelement im Laufe der Zeit und setzt sich mit Abriebpartikeln zu, so kann das Filterelement entnommen und entweder gereinigt oder ausgetauscht werden.

In bevorzugter Ausführung sind über den Umfang verteilt eine Mehrzahl von Lüfterschaufeln angeordnet. Diese können an einem Lüfterring gehalten sein und bilden gemeinsam mit diesem ein Lüfterrad. Die Lüfterschaufeln - und ggf. auch das gesamte Lüfterrad - ist entweder drehfest mit der Radfelge oder einem mit der Radfelge verbundenen Bauteil gekoppelt oder drehbar an der Radfelge bzw. dem weiteren Bauteil gelagert. Bei drehfester Lagerung ist die Rotation der Lüfterschaufel ursächlich für die Erzeugung des Luftstromes zum Transport des Bremsabriebs zum Filterelement, bei drehbarer Lagerung die Relativdrehbewegung zwischen Radfelge und Lüfterschaufel.

Für den Fall der drehfesten Koppelung dreht sich die Lüfterschaufel mit der Radfelge, wobei der Luftstrom über die strömungsgünstige Form der Lüfterschaufel erzeugt wird.

Bei einer besonderen Ausgestaltung der Erfindung ist die Lüfterschaufel durch eine Felgenspeiche gebildet. Hierbei ist die Felgenspeiche derart geformt, dass der erforderliche Luftstrom durch die Felgenspeiche selbst erzeugt wird. Durch die einteilige Ausbildung der Lüfterschaufel mit der Felge können zusätzliche Bauteile eingespart werden. Die Felgenspeichen, welche für die Stabilität der Felge erforderlich sind, übernehmen dann zusätzlich noch die Aufgabe der Erzeugung des erforderlichen Luftstroms.

Für den Fall der drehbaren Lagerung der Lüfterschaufel weist diese zweckmäßig die gleiche Drehachse wie die Radfelge auf. In dieser Ausführung können Lüfterschaufel bzw. das Lüfterrad und die Radfelge eine Relativdrehbewegung zueinander ausführen, was zur Realisierung strömungstechnischer Effekte ausgenutzt werden kann, beispielsweise für eine Fortführung der Umlaufbewegung der Lüfterschaufel auch nach Reduzierung der Drehgeschwindigkeit der Radfelge bzw. einem Stillstand des Rades. Dies wird insbesondere durch die Trägheit der Lüfterschaufel bzw. des Lüfterrades erreicht, wobei dieser Effekt noch dadurch erheblich verbessert und verstärkt werden kann, dass an der Lüfterschaufel bzw. dem Lüfterrad eine zusätzliche Schwungmasse vorgesehen ist, die das Trägheitsmoment und damit auch das Drehvermögen des Lüfterrades nach dem Abbremsen des Rades erheblich steigert. Das erhöhte Trägheitsmoment führt dazu, dass auch nach Beendigung des Bremsvorganges die Lüfterschaufel bzw. das Lüfterrad sich für eine bestimmte Zeit weiter dreht und einen Luftstrom in Richtung auf das Filterelement erzeugt; hierdurch wird der Wirkungsgrad der Filtration nochmals deutlich verbessert.

Eine zusätzliche Schwungmasse an der Lüfterschaufel bzw. dem Lüfterrad vorzusehen bietet zudem den Vorteil, dass auf diese Weise mit einfachen Maßnahmen ein Lüfterrad auf verschiedene Einsatzfälle angepasst werden kann. Gemäß einer besonders vorteilhaften Weiterbildung ist vorgesehen, dass das Schwungmassenelement in Radialrichtung verstellbar an der Lüfterschaufel bzw. dem Lüfterrad gehalten ist, insbesondere über ein Federelement, das das Schwungmassenelement in einer radial zurückgezogenen, der Drehachse benachbarten Position hält. Zu Beginn eines Anfahrvorganges des Fahrzeuges ist die Kraft des Federelementes noch ausreichend, das Schwungmassenelement gegen die Zentrifugalkraft in der drehachsennahen Position zu halten. Mit zunehmender Drehgeschwindigkeit des Rades werden die Federkräfte überwunden und das Schwungmassenelement wandert radial an der Lüfterschaufel bzw. dem Lüfterrad nach außen, wodurch das Trägheitsmoment erhöht wird. Auf diese Weise kann das Lüfterrad zusätzliche kinetische Energie speichern, die nach der Abbremsung des Rades wieder abgegeben wird und zu einem länger anhaltenden Rotieren des Lüfterrades relativ zur Radfelge führt.

Es kann zweckmäßig sein, die Lüfterschaufel mit einer Rasteinrichtung zu versehen, die unterhalb einer Grenzbeschleunigung bzw. -verzögerung in Rastposition steht, in welcher die Lüfterschaufel drehfest mit der Radfelge gekoppelt ist. Die Rastposition kann unter optischen Gesichtspunkten gewählt werden, beispielsweise dergestalt, dass im Stillstand des Fahrzeuges unterhalb der Grenzbeschleunigung die Lüfterschaufel unmittelbar hinter einer Strebe der Radfelge verborgen ist, so dass die Lüfterschaufel von außen nicht sichtbar ist. Diese drehfeste Verrastung zwischen Lüfterschaufel und Radfelge wird so lange beibehalten, wie der Betrag des Grenzbeschleunigungswertes nicht überschritten wird, insbesondere das Fahrzeug nicht abgebremst wird. Während eines Bremsvorganges wird dagegen üblicherweise der Betrag des Beschleunigungsgrenzwertes überschritten, woraufhin die Lüfterschaufel aus der Rastposition in die Ausrastposition gelangt und eine Relativdrehbewegung gegenüber der Radfelge ausführen kann.

Zur Verbesserung des Filtrationswirkungsgrades kann es zweckmäßig sein, das Filterelement elektrostatisch auszuführen. Hierzu wird vorteilhafterweise als Funktion aktueller Zustands- bzw. Betriebsgrößen eine elektrische Spannung an das Filterelement angelegt, wodurch die Anlagerung elektrisch geladener Staubteilchen das Filterelement deutlich unterstützt wird. Das Anlegen der elektrischen Spannung wird bevorzugt an den Bremsvorgang gekoppelt, derart, dass der Bremsvorgang detektiert wird, insbesondere über eine Betätigung des Bremspedales, und in einem Steuergerät daraufhin ein Signal generiert wird, über das eine Spannungsquelle mit dem Filterelement verbunden wird. Mit dem Lösen des Bremspedals wird grundsätzlich auch das Anlegen der elektrischen Spannung aufgehoben, wobei es zweckmäßig sein kann, eine Totzeit vorzusehen, so dass für einen bestimmten Zeitraum auch nach Beendigung des Bremsvorganges die elektrische Spannung weiter an dem Filterelement angelegt bleibt.

Gemäß einer weiteren vorteilhaften Ausführung ist zwischen dem Filterelement und der Radfelge ein Dichtungselement angeordnet, welches Fehlluftströmungen zur Umgehung des Filterelementes verhindern soll. Das Dichtungselement kann entweder fest mit dem Filterelement verbunden sein oder mit der Radfelge bzw. einem mit der Radfelge drehfest gekoppelten Bauteil.

Das Filterelement ist bevorzugt nicht drehbar gelagert, sondern sitzt auf einem karosseriefesten Bauteil auf, beispielsweise auf dem Radlagergehäuse.

Gemäß noch einer weiteren, vorteilhaften Ausführung ist eine elektrische Pumpe zur Erzeugung bzw. zur Unterstützung des Luftstromes vorgesehen. Diese elektrische Pumpe befindet sich beispielsweise stromab des Filterelementes und erzeugt einen Sog, der die Durchströmung des Filterelements unterstützt und zugleich zu einer

Ausleitung des gereinigten Luftstromes führt.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
Fig. 1 einen Schnitt durch eine Radfelge eines Kraftfahrzeugs mit einer Bremsstaubaufnahmevorrichtung zur Filtration von Bremsstaub, der als Abrieb der Fahrzeug-Scheibenbremse anfällt, wobei die Bremsstaubaufnahmevorrichtung Lüfterschaufeln auf der Innenseite der Radfelge und ein Filterelement umfasst,
Fig. 2 eine Radfelge mit einer Bremsstaubaufnahmevorrichtung in einer modifizierten Ausführung, bei der das Filterelement als elektrostatisches Filtermedium ausgeführt ist, an das während des Bremsvorganges eine elektrische Spannung angelegt wird,
Fig. 3 eine schematische Darstellung einer Fahrzeug-Scheibenbremse, die über ein Bremspedal zu betätigen ist, wobei die Betätigung des Bremspedals sensorisch festgestellt und die Sensorsignale zum Anlagen einer Spannung an das Filterelement herangezogen werden,
Fig. 4 eine Radfelge mit einer Bremsstaubaufnahmevorrichtung, die ein drehbar an der Radfelge gelagertes Lüfterrad mit einer Mehrzahl von Lüfterschaufeln umfasst,
Fig. 5 eine Fig. 4 entsprechende Darstellung, jedoch mit der Lagerung des Lüfterrades auf einem Absatz der Bremsscheibe, und mit einem Schwungmassenelement an einer Lüfterschaufel des Lüfterrades,
Fig. 6 eine weitere Bremsstaubaufnahmevorrichtung, deren Lüfterrad auf einem Zwischenring drehbar gelagert ist, welcher sich an die Stirnseite der Bremsscheibe zur Spurverbreiterung anschließt,
Fig. 7 eine Radfelge mit einer Bremsstaubaufnahmevorrichtung entsprechend der Ausführung nach Fig. 4, jedoch mit einer zusätzlichen elektrischen Pumpe stromab des Filterelementes zur Erzeugung eines den Luftstrom unterstützenden Soges,
Fig. 8 eine perspektivische Darstellung einer Radfelge mit schematisch eingetragener Position der Lüfterschaufeln des Lüfterrades,
Fig. 9 eine schematische Darstellung der Rasteinrichtung, über die das drehbar gelagerte Lüfterrad mit der Radfelge verrastet ist.
In den Figuren sind gleiche Bauteile mit gleichen Bezugszeichen versehen.

### Ausführungsformder Erfindung

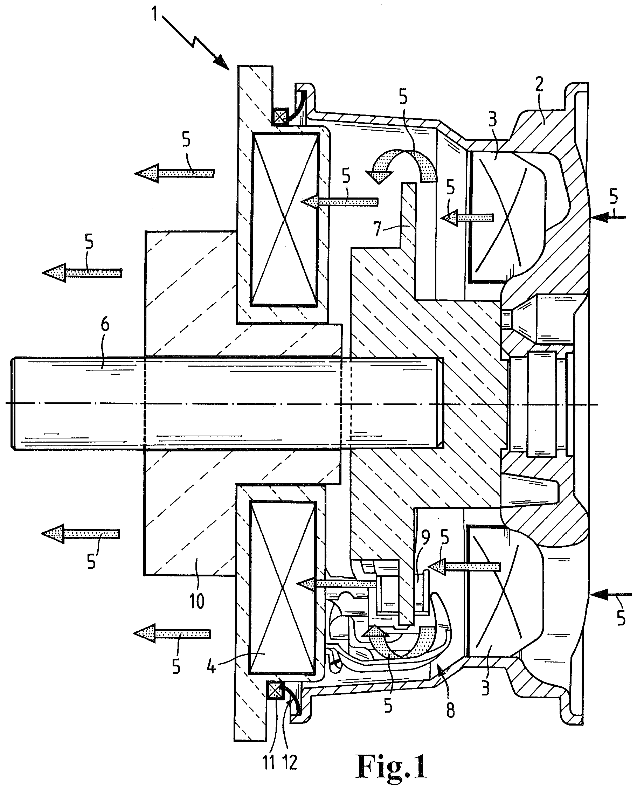

In Fig. 1 ist eine Bremsstaubaufnahmevorrichtung 1 für Bremsstaub dargestellt, der als Abrieb beim Bremsen einer Fahrzeug-Scheibenbremse entsteht. Die Bremsstaubaufnahmevorrichtung 1 ist im Inneren einer Radfelge 2 aufgenommen und umfasst Lüfterschaufeln 3 sowie ein Filterelement 4. Die Lüfterschaufeln 3 befinden sich auf der dem Fahrzeug zugewandten Innenseite der Radfelge 2 und sind fest mit der Radfelge verbunden. Über den Umfang verteilt sind eine Mehrzahl derartiger Lüfterschaufeln 3 vorgesehen. Die Lüfterschaufeln 3 weisen ein strömungsgünstiges Profil auf und erzeugen einen von außen nach innen gerichteten Luftstrom 5, der durch Öffnungen in der Felge 2 geleitet wird. Der Luftstrom 5 überstreicht die Bremsscheibe 7, an der die von einem Bremssattel 8 beaufschlagten Bremsbeläge 9 anliegen, und transportiert den Bremsabrieb zu dem Filterelement 4, das fahrzeugfest angeordnet ist. Das Filterelement 4 ist ringförmig aufgebaut und sitzt auf einem karosseriefesten Radlagergehäuse 10 auf; alternativ kommt auch eine Befestigung des Filterelementes auf einem Achsschenkel bzw. einem Radträger in Betracht. Das Radlagergehäuse 10 umgreift eine Radachse 6, die Träger der Bremsscheibe 7 sowie der Radfelge 2 ist. Der Luftstrom 5 durchströmt das Filterelement 4, wobei die Bremsabriebpartikel an der Rohseite ausgefiltert werden, woraufhin der gereinigte Luftstrom über die Reinseite des Filterelementes 4 austritt und schließlich abgeleitet wird. Auf diese Weise wird zum einen eine effektive Reinigung des Luftstromes von den Bremsabriebpartikeln erreicht, die sich nicht mehr im Bereich der Radfelge ablagern können. Zum andern bewirkt der die Bremsscheibe 7 überstreichende Luftstrom auch eine Kühlung.

Um die Roh- von der Reinseite des Filterelementes zu separieren und Fehlluftströme zwischen Roh- und Reinseite zu vermeiden, befindet sich an der radial außen liegenden Schulter des Filterelements 4 ein ringförmiges Dichtungselement 11, das mit einer umlaufenden Dichtlippe 12 versehen ist, welche dichtend an einer axialen Stirnseite der Radfelge 2 anliegt. Diese Dichtlippe 12 bewirkt zum einen einen strömungsdichten Abschluss des die Rohseite bildenden Innenraums der Felge 2, zum andern erlaubt die Dichtlippe ohne bzw. mit nur geringem Verschleiß eine Drehbewegung der Felge 2.

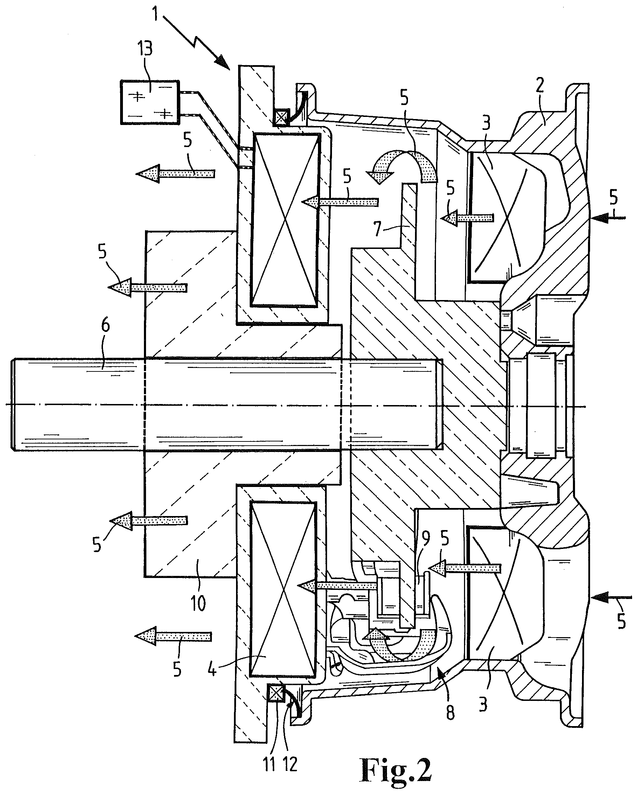

Das in Fig. 2 dargestellte Ausführungsbeispiel entspricht in seinem Grundaufbau demjenigen nach Fig. 1. Die Bremsstaubaufnahmevorrichtung 1 umfasst in gleicher Weise drehfest mit der Radfelge 2 verbundene Lüfterschaufeln 3 zur Erzeugung eines Luftstromes 5, der an der Bremsscheibe 7 und den Bremsbelägen 9 vorbeigeführt und auf ein Filterelement 4 geleitet wird. Zusätzlich ist aber im Ausführungsbeispiel nach Fig. 2 das Filterelement 4 als elektrostatisches Filtermittel ausgebildet, dem eine Stromanschlusseinrichtung 13 zugeordnet ist, über die an das Filterelement 4 eine elektrische Spannung anlegbar ist. Die Höhe der Spannung sowie der Zeitpunkt und die Zeitdauer der anzulegenden Spannung kann in Abhängigkeit diverser Zustands- und Betriebsgrößen des Fahrzeugs bzw. der dem Fahrzeug zugeordneten Aggregate eingestellt werden. Hier kommt insbesondere ein Bremsvorgang in Betracht, der mittels geeigneter Sensoren detektiert wird, woraufhin ein Steuergerät im Fahrzeug Stellsignale erzeugt und die Stromanschlusseinrichtung 13 beaufschlagt, das daraufhin das Filterelement 4 mit einer Spannung beaufschlagt.

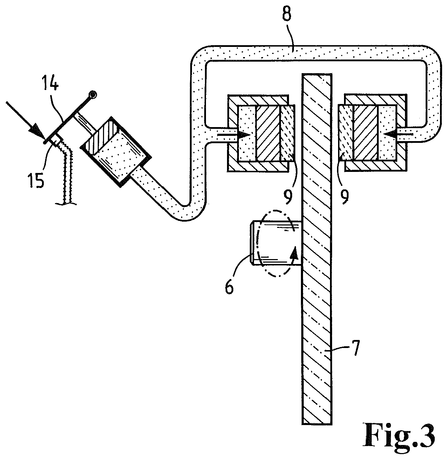

In Fig. 3 ist eine Fahrzeug-Scheibenbremseinrichtung schematisch dargestellt. Die Scheibenbremseinrichtung wird über das Bremspedal 14 vom Fahrer betätigt, wobei die Änderung der Bremspedalposition über einen Sensor 15 erfasst wird, der entsprechende Sensorsignale zu dem Steuergerät liefert, woraufhin wie vorbeschrieben Steuersignale zum Anlagen einer Spannung an das Filterelement an die Stromanschlusseinrichtung 13 geleitet werden.

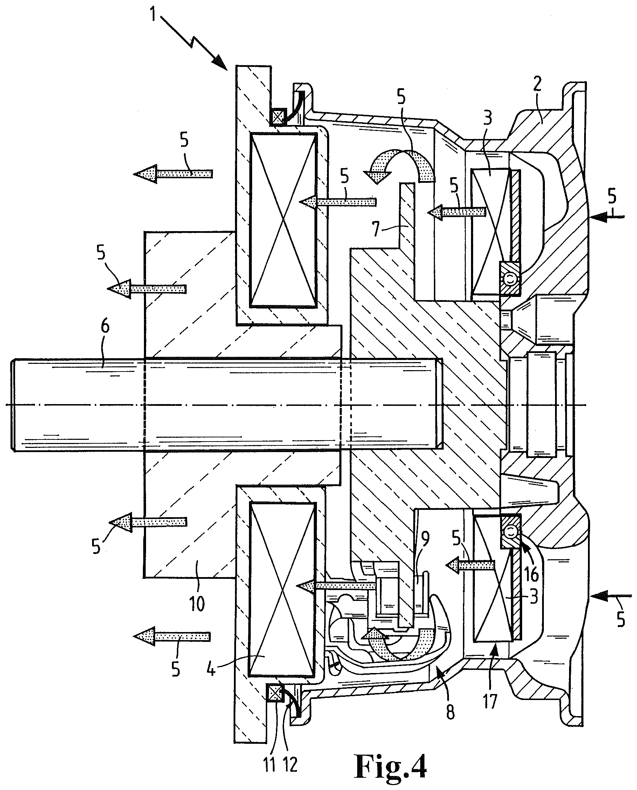

In Fig. 4 ist eine weitere Variante einer Bremsstaubaufnahmevorrichtung 1 an einer Radfelge 2 dargestellt. Die Bremsstaubaufnahmevorrichtung 1 umfasst wiederum ein Filterelement 4 sowie Lüfterschaufeln 3, über die ein Luftstrom 5 zu erzeugen ist. Die Lüfterschaufeln 3 sind nun aber Bestandteil eines Lüfterrades 17, das zusätzlich einen Lüfterring 16 umfasst, an dem die Lüfterschaufeln 3 radial verlaufend angeordnet sind und über den das Lüfterrad 17 drehbar an der Innenseite der Radfelge 2 gelagert ist. Diese drehbare Lagerung des Lüfterrades 17 gegenüber der Radfelge 2 mit gleicher Drehachse ermöglicht eine Relativdrehbewegung des Lüfterrades 17 gegenüber der Radfelge 2. Aufgrund der Trägheit des Lüfterrades 17 wird sich dieses auch nach einem Abbremsen des Fahrzeuges und dem Stillstand der Radfelge 2 weiter drehen und damit auch nach dem Stillstand einen Luftstrom 5 erzeugen, der die Bremsabriebpartikel dem Filterelement 4 zuführt.

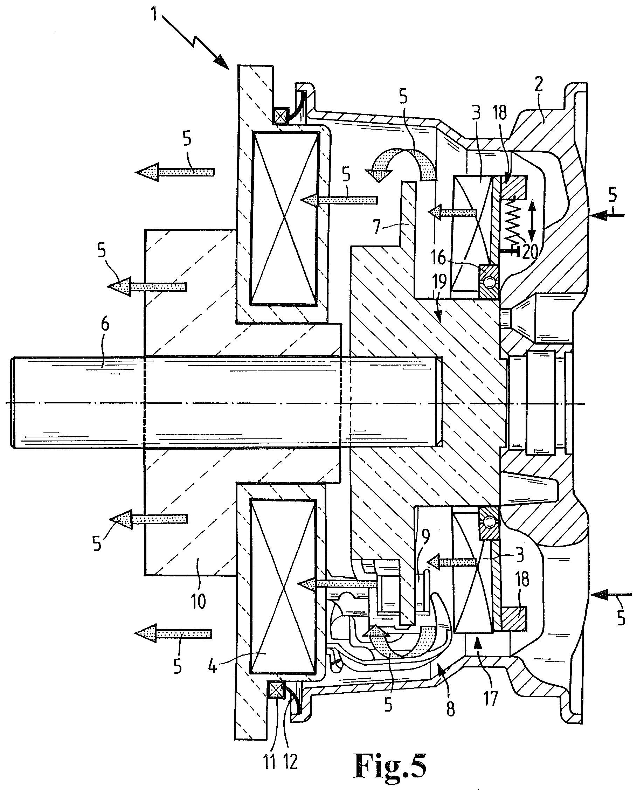

Auch im Ausführungsbeispiel nach Fig. 5 ist die Bremsstaubaufnahmevorrichtung mit einem Lüfterrad 17 versehen, bestehend aus einem drehbar gelagerten Lüfterring 16 und daran angeordneten Lüfterschaufeln 3. Der Lüfterring 16 ist jedoch an einem Absatz 19 drehbar gelagert, welcher Bestandteil der Bremsscheibe 7 ist.

Des Weiteren ist am Lüfterrad 17 ein Schwungmassenelement 18 angeordnet, welches dem Lüfterrad 17 ein höhere Trägheit verleiht, so dass das Lüfterrad nach dem Abbremsen der Radfelge 2 für eine längere Zeitdauer noch umläuft und einen Luftstrom 5 erzeugt. Das Schwungmassenelement 18 kann fest am Lüfterrad 17 befestigt sein (untere Darstellung), insbesondere im radial außen liegenden Bereich, um das Trägheitsmoment deutlich zu steigern. Gemäß einer weiteren Variante, die auch in Fig. 5 dargestellt ist, ist das Schwungmassenelement 18 über ein Federelement 20 radial verschieblich am Lüfterrad 17 gehalten (obere Darstellung). Das Federelement 20 hält das Schwungmassenelement 18 in einer radial zurückgezogenen Position. Mit zunehmender Winkelgeschwindigkeit des Lüfterrades 17 wird das Federelement 20 aufgrund der auf das Schwungmassenelement wirkenden Zentrifugalkräfte elongiert, so dass das Schwungmassenelement 18 radial nach außen wandert. Diese radiale Verschiebbewegung des Schwungmassenelementes hat eine Erhöhung des Trägheitsmomentes des Lüfterrades zur Folge. Über die Wahl der Federkonstanten des Federelementes 20 kann Einfluss darauf genommen werden, bei welcher Winkelgeschwindigkeit des Lüfterrades sich das Schwungmassenelement 18 radial nach außen bewegt.

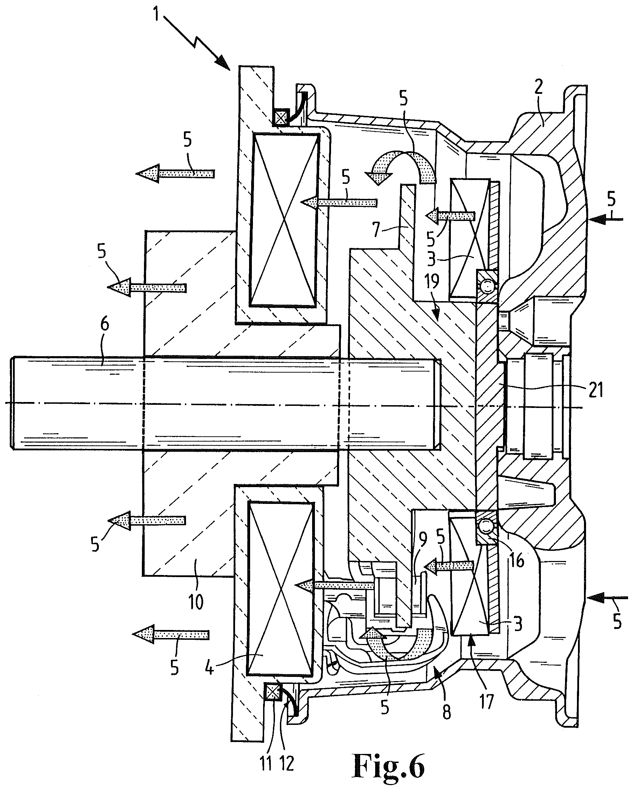

Das Ausführungsbeispiel gemäß Fig. 6 entspricht weitgehend demjenigen nach Fig. 4, jedoch mit dem Unterschied, dass das Lüfterrad 17 im Bereich seines Lüfterringes 16 an einem Zwischenring 21 drehbar gelagert ist, der dem Absatz 19 an der Bremsscheibe 7 stirnseitig vorgelagert ist und sich zwischen diesem Absatz 19 und der Radfelge 2 befindet. Der Zwischenring 21 kann für eine Spurverbreiterung zum Einsatz kommen.

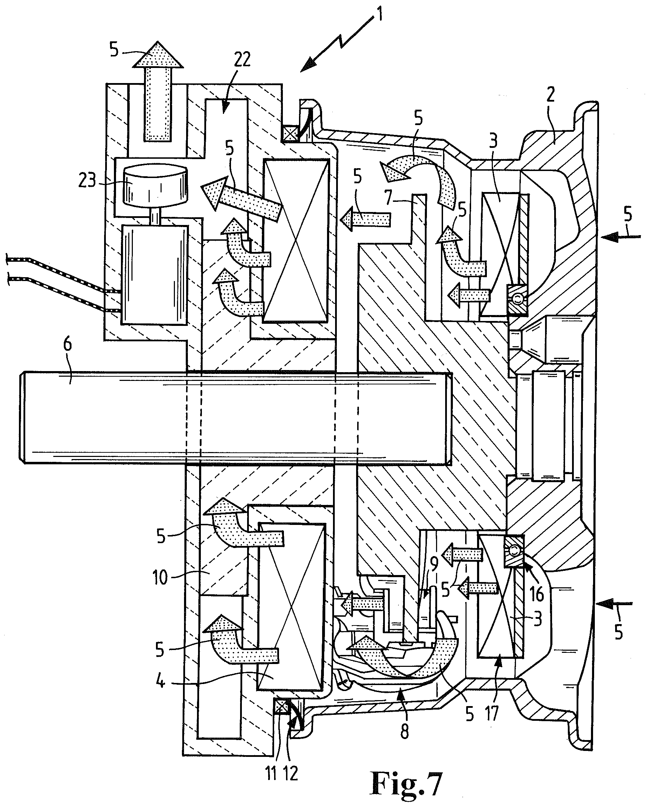

Auch im Ausführungsbeispiel nach Fig. 7 ist die Bremsstaubaufnahmevorrichtung 1 mit einem drehbar gelagerten Lüfterrad 17 versehen, dessen Lüfterring 16 drehbar an der Radfelge 2 gehalten ist, sowie einem Filterelement 4, dem der Luftstrom 5 zuzuführen ist. Auf der Reinseite des Filterelementes 4 ist ein Reinraum 22 zur Aufnahme des gereinigten Luftstromes gebildet. In diesem Reinraum 22 befindet sich eine elektrische Pumpe 23, die den Luftstrom 5 aus dem Reinraum 22 ableitet. Hierdurch entsteht auf der Reinseite des Filterelementes 4 ein Sog, der die Luftströmung auch auf der Rohseite des Filterelementes unterstützt, also in dem Innenraum, der von der Radfelge 2 eingeschossen ist und in dem sich die Bremsscheibe 7 befindet und der an einer Seite von der Rohseite des Filterelements begrenzt ist. Zweckmäßig wird die elektrische Pumpe 23 nur bedarfsweise eingeschaltet, insbesondere nur während eines Bremsvorganges.

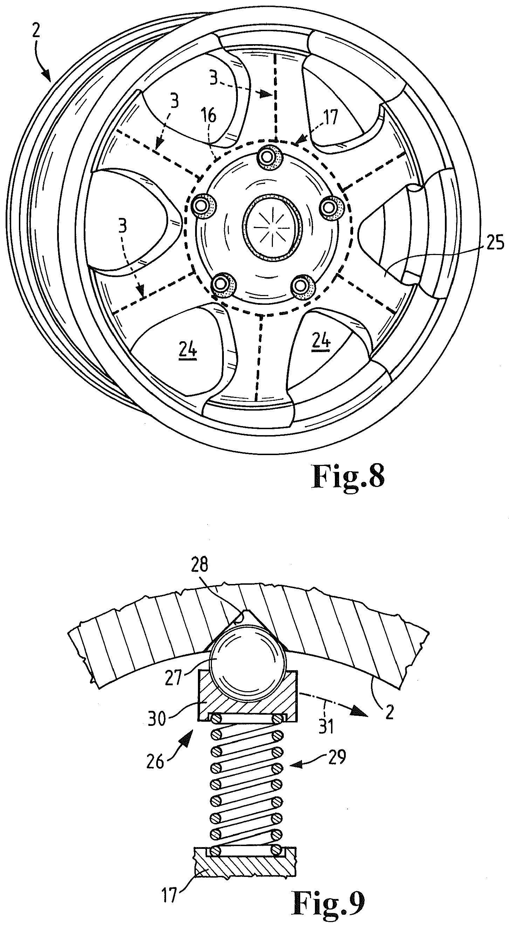

In Fig. 8 ist eine Felge 2 in Einzeldarstellung gezeigt. Mit gepunkteten Linien ist schematisch das überdeckte Lüfterrad 17 mit den Lüfterschaufeln 3 am Lüfterring 16 eingetragen. Die Felge 2 besitzt radial verlaufende Streben 25, zwischen denen jeweils eine Öffnung 24 gebildet ist. Das Lüfterrad 17 ist drehbar an der Radfelge 2 gelagert, es nimmt aber in Fahrzuständen, in denen nicht gebremst wird, gegenüber der Radfelge 2 eine Rastposition ein, in welcher die Lüfterschaufeln 3 unmittelbar hinter den Streben 25 liegen und von diesen von außen nicht sichtbar verdeckt sind. Erst während des Bremsvorganges, bei Überschreiten eines Grenzverzögerungswertes, löst sich das Lüfterrad 17 aus der Rastposition und bewegt sich gegenüber der Radfelge 2 mit einer Relativwinkelgeschwindigkeit.

In Fig. 9 ist die Rasteinrichtung 26 im Detail schematisch dargestellt, über die das Lüfterrad 17 während des regulären Beschleunigens des Fahrzeugs und bei konstanter Geschwindigkeit in einer Rastposition bezüglich der Radfelge 2 steht. Die Rasteinrichtung 26 umfasst eine Rastkugel 27 an der radial außen liegenden Stirnseite einer Halterung 30, die über eine Rastfeder 29 mit einem Bauteil des Lüfterrades 17 verbunden ist. In der Rastposition ragt die Rastkugel 27 in eine Rastaufnahme 28 ein, die an der Radfelge 2 gebildet ist. Bewegt sich das Lüfterrad 17 relativ zur Radfelge 2, so gelangt auch die Halterung 30 wie mit Pfeilrichtung 31 dargestellt in eine Relativbewegung bezüglich der Radfelge 2, woraufhin die Rastkugel 27 aus der Rastaufnahme 28 herausrutscht und die Rastposition aufgehoben ist. Mit abnehmender Relativwinkelgeschwindkeit des Lüfterrades 17 bezogen auf die Felge 2 reicht die Kraft der Rastfeder 29 wieder aus, um die Rastposition wieder herzustellen, sobald die Rastkugel 27 die Rastaufnahme 28 überstreicht.

## Patentansprüche

1. Bremsstaubaufnahmevorrichtung für Kraftfahrzeuge, mit einer Luftstromerzeugungseinrichtung (3) zur Erzeugung eines die Bremsteile (7, 9) einer Fahrzeug-Radbremse erfassenden Luftstromes (5), der Bremsstaub der Radbremse einer Staubsammeleinrichtung (4) zuführt, **dadurch gekennzeichnet, dass** die Luftstromerzeugungseinrichtung als mindestens eine rotierbare Lüfterschaufel (3) ausgebildet ist und die Staubsammeleinrichtung ein Filterelement (4) umfasst, wobei die Lüfterschaufel (3) an der Innenseite einer Radfelge bzw. an einem mit der Radfelge drehfest gekoppelten Bauteil angeordnet ist.

2. Bremsstaubaufnahmevorrichtung nach Anspruch 1, **dadurch gekennzeichnet, dass** über den Umfang verteilt mehrere Lüfterschaufeln (3) vorgesehen sind.

3. Bremsstaubaufnahmevorrichtung nach Anspruch 2, **dadurch gekennzeichnet, dass** die Lüfterschaufeln (3) an einem Lüfterring (16) angeordnet sind und gemeinsam mit dem Lüfterring (16) ein Lüfterrad (17) bilden.

4. Bremsstaubaufnahmevorrichtung nach einem der Ansprüche 1 bis 3, **dadurch gekennzeichnet, dass** die Lüfterschaufel (3) auf der Innenseite einer Radfelge (2) bzw. eines mit der Radfelge (2) drehfest gekoppelten Bauteils angeordnet ist.

5. Bremsstaubaufnahmevorrichtung nach Anspruch 4, **dadurch gekennzeichnet, dass** die Lüfterschaufel (3) drehfest mit der Radfelge (2) verbunden ist.

6. Bremsstaubaufnahmevorrichtung nach einem der vorangehenden Ansprüche,
**dadurch gekennzeichnet, dass** die Lüfterschaufel (3) durch eine Felgenspeiche gebildet ist.

7. Bremsstaubaufnahmevorrichtung nach Anspruch 4, **dadurch gekennzeichnet, dass** die Lüfterschaufel (3) drehbar an der Radfelge (2) bzw. einem mit der Radfelge (2) gekoppelten Bauteil gelagert ist und die gleiche Drehachse wie die Radfelge (2) aufweist.

8. Bremsstaubaufnahmevorrichtung nach Anspruch 7, **dadurch gekennzeichnet, dass** an der Lüfterschaufel (3) bzw. am Lüfterrad (17) ein Schwungmassenelement (18) angeordnet ist.

9. Bremsstaubaufnahmevorrichtung nach Anspruch 8, **dadurch gekennzeichnet, dass** das Schwungmassenelement (18) in Radialrichtung verstellbar an der Lüfterschaufel gehalten ist und insbesondere das Schwungmassenelement (18) über ein Federelement (20) verstellbar an der Lüfterschaufel (3) gehalten ist.

10. Bremsstaubaufnahmevorrichtung nach einem der Ansprüche 7 bis 9, **dadurch gekennzeichnet, dass** die Lüfterschaufel (3) mit einer Rasteinrichtung (26) versehen ist, die unterhalb einer Grenzbeschleunigung in Rastposition steht, in der die Lüfterschaufel (3) drehfest mit der Radfelge (2) gekoppelt ist, und oberhalb der Grenzbeschleunigung in Außerrastposition steht, in der die Lüfterschaufel (3) relativ zur Radfelge (2) drehbar ist.

11. Bremsstaubaufnahmevorrichtung nach einem der Ansprüche 1 bis 10, **dadurch gekennzeichnet, dass** das Filterelement (4) elektrostatisch ausgeführt ist und / oder dass an das Filterelement (4) in Abhängigkeit aktueller Zustands- und Betriebsgrößen eine elektrische Spannung anlegbar ist und insbesondere während eines Bremsvorganges eine elektrische Spannung an das Filterelement (4) angelegt wird.

12. Bremsstaubaufnahmevorrichtung nach einem der Ansprüche 1 bis 11, **dadurch gekennzeichnet, dass** das Filterelement (4) auf einem Radlagergehäuse (10) feststehend montiert ist.

13. Bremsstaubaufnahmevorrichtung nach einem der Ansprüche 1 bis 12, **dadurch gekennzeichnet, dass** eine elektrische Pumpe (23) zur Erzeugung bzw. Unterstützung des Luftstromes (5) vorgesehen ist.

## Claims

1. Brake dust collector for motor vehicles, with an air flow generating means (3) for generating an air flow (5) that passes over the brake parts (7, 9) of a vehicle wheel brake and delivers the brake dust of the wheel brake to a dust collector (4), **characterized in that** the air flow generating means is designed at least as one rotating fan blade (3) and that the dust collector comprises a filter element (4), wherein the fan blade (3) is disposed on the interior side of a wheel rim or at a component coupled with a wheel rim in a rotationally fixed manner.

2. Brake dust collector according to claim 1, **characterized in that** a plurality of fan blades (3) distributed across the circumference are provided.

3. Brake dust collector according to claim 2, **characterized in that** the fan blades (3) are disposed at a fan ring (16) and form, together with the fan ring (16), a fan impeller (17).

4. Brake dust collector according to one of the claims 1 to 3, **characterized in that** the fan blade (3) is disposed on the interior side of a wheel rim (2) or of a component coupled with the wheel rim (2) in a rotationally fixed manner.

5. Brake dust collector according to claim 4, **characterized in that** the fan blade (3) is connected to the wheel rim (2) in a rotationally fixed manner.

6. Brake dust collector according to one of the above claims, **characterized in that** the fan blade (3) is formed by a rim spoke.

7. Brake dust collector according to claim 4, **characterized in that** the fan blade (3) is rotationally mounted to the wheel rim (2) or to a component coupled with the wheel rim (2) and features the same axis of rotation as the wheel rim (2).

8. Brake dust collector according to claim 7, **characterized in that** a flywheel mass element (18) is disposed at the fan blade (3) or at the fan impeller (17).

9. Brake dust collector according to claim 8, **characterized in that** the flywheel mass element (18) is held adjustably at the fan blade in radial direction and that in particular the flywheel mass element (18) is held adjustably at the fan blade (3) by means of a spring element (20).

10. Brake dust collector according to one of the claims 7 to 9, **characterized in that** the fan blade (3) is provided with a locking means (26) which is below a limit acceleration in locking position in which the fan blade (3) is coupled with the wheel rim (2) in a rotationally fixed manner, and above the limit acceleration in a non-locking position in which the fan blade (3) is rotatable in relation to the wheel rim (2).

11. Brake dust collector according to one of the claims 1 to 10, **characterized in that** the filter element (4) is designed electrostatically and / or that an electrical voltage can be applied to the filter element (4) depending on the current state and operating variables and that in particular during a braking process an electrical voltage is applied to the filter element (4).

12. Brake dust collector according to one of the claims 1 to 11, **characterized in that** the filter element (4) is fixedly mounted on a wheel bearing housing (10).

13. Brake dust collector according to one of the claims 1 to 12, **characterized in that** an electrical pump (23) for generating or supporting the airflow (5) is provided.

## Revendications

1. Dispositif collecteur de poussière de frein pour véhicules automobiles, avec un dispositif générateur de flux d'air (3) destiné à générer un flux d'air (5) qui balaie les éléments de freinage (7, 9) d'un frein de roue de véhicule et achemine la poussière de frein du frein de roue à un dispositif de collecteur de poussière (4), **caractérisé en ce que** le dispositif générateur de flux d'air est exécuté en tant que pale de ventilateur tournante (3), au moins au nombre d'une, et que le dispositif collecteur de poussière comprend un élément filtrant (4), la pale de ventilateur (3) étant disposée sur la face interne d'une jante ou sur un composant accouplé à la jante de manière à ne pas pouvoir tourner.

2. Dispositif collecteur de poussière de frein selon la revendication 1, **caractérisé en ce que** plusieurs pales de ventilateur (3) réparties sur le pourtour sont prévues.

3. Dispositif collecteur de poussière de frein selon la revendication 2, **caractérisé en ce que** les pales de ventilateur (3) sont placées sur une virole de ventilateur (16) et forment une roue de ventilateur (17) avec la virole de ventilateur (16).

4. Dispositif collecteur de poussière de frein selon l'une des revendications 1 à 3, **caractérisé en ce que** la pale de ventilateur (3) est disposée sur la face interne d'une jante (2) ou sur un composant accouplé à la jante (2) de manière à ne pas pouvoir tourner.

5. Dispositif collecteur de poussière de frein selon la revendication 4, **caractérisé en ce que** la pale de ventilateur (3) est reliée à la jante (2) de manière à ne pas pouvoir tourner.

6. Dispositif collecteur de poussière de frein selon l'une des revendications précédentes, **caractérisé en ce que** la pale de ventilateur (3) est formée par un rayon de jante.

7. Dispositif collecteur de poussière de frein selon la revendication 4, **caractérisé en ce que** la pale de ventilateur (3) est logée sur la jante (2) ou sur un composant accouplé à la jante (2) de manière à pouvoir tourner et a le même axe de rotation que la jante (2).

8. Dispositif collecteur de poussière de frein selon la revendication 7, **caractérisé en ce qu**'un élément de volant d'inertie (18) est disposé sur la pale de ventilateur (3) ou sur la roue de ventilateur (17).

9. Dispositif collecteur de poussière de frein selon la revendication 8, **caractérisé en ce que** l'élément de volant d'inertie (18) est maintenu de manière mobile en sens radial sur la pale de ventilateur et que, en particulier, l'élément de volant d'inertie (18) est maintenu de manière mobile par l'intermédiaire d'un élément élastique (20) sur la pale de ventilateur (3).

10. Dispositif collecteur de poussière de frein selon l'une des revendications 7 à 9, **caractérisé en ce que** la pale de ventilateur (3) est pourvue d'un dispositif d'enclenchement (26) qui est, en dessous d'une accélération limite, en position d'enclenchement dans laquelle la pale de ventilateur (3) est accouplée à la jante (2) de manière à ne pas pouvoir tourner et qui est, au-dessus de l'accélération limite, en position de déclenchement dans laquelle la pale de ventilateur (3) peut tourner par rapport à la jante (2).

11. Dispositif collecteur de poussière de frein selon l'une des revendications 1 à 10, **caractérisé en ce que** l'élément filtrant (4) est réalisé en version électrostatique et / ou que l'élément filtrant (4) peut être soumis à une tension électrique en fonction de paramètres d'état et de fonctionnement actuels et que, notamment pendant un processus de freinage, l'élément filtrant (4) est soumis à une tension électrique.

12. Dispositif collecteur de poussière de frein selon l'une des revendications 1 à 11, **caractérisé en ce que** l'élément filtrant (4) est monté de manière fixe sur un carter de roulement de roue (10).

13. Dispositif collecteur de poussière de frein selon l'une des revendications 1 à 12, **caractérisé en ce qu**'une pompe électrique (23) destinée à générer ou à assister le flux d'air (5) est prévue.
